# EUROPÄISCHE PATENTSCHRIFT

(11) **EP 2 560 829 B1**
(45) Veröffentlichungstag und Bekanntmachung des Hinweises auf die Patenterteilung: **20.05.2015**
(21) Anmeldenummer: 11709107.4
(22) Anmeldetag: 15.03.2011
(51) Int. Cl.: B60C 9/20, B60C 9/22

(54) **FAHRZEUGLUFTREIFEN**
PNEUMATIC VEHICLE TYRE
PNEUMATIQUE DE VÉHICULE

(30) Priorität: 21.04.2010 DE 102010016550
(43) Veröffentlichungstag der Anmeldung: 27.02.2013
(73) Patentinhaber: Continental Reifen Deutschland GmbH, 30165 Hannover (DE)
(72) Erfinder: BECKER, Theresia, 40625 Düsseldorf (DE); JEROMIN, Dieter, 30419 Hannover (DE); KRAUS, Martin, Josef, 30167 Hannover (DE); MAZUR, Heinz, 30900 Wedemark (DE)
(74) Vertreter: Finger, Karsten
(86) Internationale Anmeldenummer: PCT/EP2011/053833
(87) Internationale Veröffentlichungsnummer: WO 2011/131419

(56) Entgegenhaltungen:
- EP-A1- 0 572 906
- EP-A1- 0 963 301
- WO-A1-00/69659
- GB-A- 2 064 445
- JP-A- 4 118 306
- JP-A- 10 250 313
- JP-A- 2008 024 104
- US-A- 3 677 319
- US-A- 4 989 659
- US-A- 5 111 864
- US-A1- 2004 144 469

## Beschreibung

Die Erfindung betrifft einen Fahrzeugluftreifen für Nutzfahrzeuge mit einer Karkasse, mit einem radial außerhalb der Karkasse aufgebauten Gürtel und mit einem radial oberhalb des Gürtels auf dem Gürtel aufgebauten profilierten Laufstreifen, wobei der Gürtel aus wenigstens drei von radial innen nach radial außen - insbesondere auf einander liegend - angeordneten Gürtellagen ausgebildet ist, von denen die radial innere und die radial äußere als Arbeitslagen mit in Gummi eingebetteten parallelen Festigkeitsträgern aus Stahl ausgebildet sind, wobei die Festigkeitsträger der radial inneren Arbeitslage in ihrer Ausrichtung einen Winkel α mit 10°≤α≤45° zur Umfangsrichtung U und die Festigkeitsträger der radial äußeren Arbeitslage in ihrer Ausrichtung einen Winkel γ zur Umfangsrichtung U mit 10°≤γ≤45° einschließen und wobei in Umfangsrichtung U des Fahrzeugreifens gesehen die Festigkeitsträger der radial inneren Arbeitslage eine entgegengesetzte axiale Neigungsrichtung zu den Festigkeitsträgern der radial äußeren Arbeitslage aufweisen.

Nutzfahrzeugreifen sind üblicherweise mit wenigstens drei Gürtellagen ausgebildet mit zwei direkt übereinander angeordneten Arbeitslagen, in welchen jeweils parallele geradlinig ausgerichtete Stahlkorde in Gummi eingebettet sind. Die Stahlkorde dieser Arbeitslagen sind üblicherweise mit einem Winkel von ca. 15° bis 30° zur Umfangsrichtung des Fahrzeugluftreifens ausgerichtet, wobei die Stahlkorde der einen Arbeitslage, in Umfangsrichtung des Reifens gesehen in entgegengesetzter axialer Richtung geneigt sind als die Stahlkorde der anderen Arbeitslage. Die beiden Arbeitslagen bilden somit einen Kreuzverband. Radial innerhalb der beiden Arbeitslagen ist üblicherweise eine Gürtellage als Sperrlage mit Stahlkorden, welche unter einem Winkel von 45° bis 90° zur Umfangsrichtung des Fahrzeugluftreifens ausgerichtet sind. Die drei Lagen bilden somit eine Art Dreiecksverband. Zusätzlich ist üblicherweise radial außerhalb der beiden Arbeitslagen eine Gürtellage als abdeckende Schräglage ausgebildet mit Stahlkorden, welche in ihrer Ausrichtung einen Winkel von ca.15° bis 30° zur Umfangsrichtung einschließen. Derartige herkömmliche Gürtel weisen eine eingeschränkte Umfangssteifigkeit auf, wodurch eine hohe Beweglichkeit der Gürtelkanten ermöglicht wird, welche sich negativ auf die Haltbarkeit des Reifens auswirken kann. Darüber hinaus ist in dem sich axial an die Gürtelkanten anschließenden äußeren axialen Erstreckungsbereich zwischen den Gürtelkanten und der Reifenmitte eine radiale Expansion des Gürtels, das sogenannte "Gürtelwachstum" möglich, wodurch lokal sowohl in axialer Richtung als auch in Umfangsrichtung erhöhter und ungleichmäßiger Abrieb des Laufstreifenprofils begünstigt werden kann.

Gelegentlich wurde vorgeschlagen, bei derartigen 4-Lagengürteln die äußere radial außerhalb der Arbeitslagen ausgebildete Gürtellage als 0°-Lage auszubilden, d. h. mit Stahlkorden, die im Wesentlichen in Umfangsrichtung des Fahrzeugluftreifens verlaufen. Diese Ausbildung bewirkt eine größere Umfangssteifigkeit, wodurch die Beweglichkeit der Gürtelkanten reduziert, Haltbarkeit und Abrieb positiv beeinflusst werden können. Die 0°-Lage wirkt jedoch hauptsächlich auf die unmittelbar angrenzende radial äußere Arbeitslage. Die weiterhin kaum beeinflusste radial innere Arbeitslage kann sich weiterhin aufgrund ihrer verbleibenden Beweglichkeit und Flexibilität negativ auf Haltbarkeit und Abrieb auswirken.

Gelegentlich wurde vorgeschlagen, einen Gürtel eines Nutzfahrzeugluftreifens mit zwei Arbeitslagen und mit einer zwischen den beiden Arbeitslagen ausgebildeten 0°-Lage auszubilden. Die hierdurch bewegte Entkopplung der Arbeitslagen und direkte Einfluss der 0°-Lage auf beide Arbeitslagen ermöglicht eine unmittelbare Versteifung beider Arbeitslagen und hierdurch eine weitere Verbesserung der Haltbarkeit. Die Stahlkorde derartiger 0°-Lagen werden dabei zur gleichmäßigen versteifenden Wirkung über die gesamte axiale Breite der 0°-Lage aus Stahlkord gespult, wobei der Stahlkord in Umfangsrichtung über den gesamten Umfang des Gürtels um die Achse des Gürtels und somit des Reifens mit geringem axialen Vorschub schraubenförmig aufgewickelt wird.

Hierdurch wird eine ausreichende gleichmäßige Umfangssteifigkeit über die gesamte axiale Breite ermöglicht. Derartige 0°-Gürtellagen erfordern jedoch einen gegenüber Schräggürtellagen hohen Einsatz an Stahlkordmaterial mit damit verbundenem erhöhtem Gewicht und Kosten. Darüber hinaus bewirkt eine derartige Ausbildung des Gürtels mit zwei Arbeitslagen, die durch eine derartige 0°-Lage entkoppelt sind, eine Reduzierung der Quersteifigkeit des Gürtels sowie eine reduzierte Biegesteifigkeit des Gürtels um die Umfangsrichtung, was das Eindringen von Fremdkörpern, wie z. B. Steinen in den Gürtel und somit Beschädigungen des Gürtels, begünstigt.

**Aus der** JP 2008 024 104 **ist ein Fahrzeugluftreifen für Nutzfahrzeuge mit vier von radial innen nach radial außen angeordneten Gürtellagen bekannt, von denen zwei Gürtellagen als Arbeitslagen mit in Gummi eingebetteten Festigkeitsträgern ausgebildet sind, die in ihrer Ausrichtung einen Winkel, der kleiner 25° ist, zur Umfangsrichtung einschließen. Die Festigkeitsträger der beiden Arbeitslagen weisen zueinander eine entgegengesetzte axiale Neigungsrichtung auf. Radial zwischen diesen beiden Arbeitslagen ist eine Gürtellage ausgebildet, die in axialer Richtung des Fahrzeugluftreifens dreigeteilt aus zwei axial äußeren Randlagenabschnitten und aus einem axial zwischen diesen angeordneten Mittellagenabschnitt ausgebildet ist.**

**Aus der** WO 00/69 659 **ist ein Fahrzeugluftreifen gemäß den Merkmalen des Oberbegriffs des Anspruchs 1 bekannt.**

Der Erfindung liegt die Aufgabe zugrunde, einen derartigen Fahrzeugluftreifen für Nutzfahrzeuge zu schaffen, der in einfacher Weise mit geringem Aufwand trotz guter Abriebeigenschaften eine verbesserte Dauerhaltbarkeit des Fahrzeugluftreifens und erhöhten Schutz des Gürtels gegen Beschädigung durch Fremdkörper ermöglicht.

Erfindungsgemäß gelöst wird die Aufgabe durch die Ausbildung eines Fahrzeugluftreifen für Nutzfahrzeuge mit einer Karkasse, mit einem radial außerhalb der Karkasse aufgebauten Gürtel und mit einem radial oberhalb des Gürtels auf dem Gürtel aufgebauten profilierten Laufstreifen, wobei der Gürtel aus wenigstens drei von radial innen nach radial außen - insbesondere aufeinander liegend - angeordneten Gürtellagen ausgebildet ist, von denen die radial innere und die radial äußere als Arbeitslagen mit in Gummi eingebetteten parallelen Festigkeitsträgern aus Stahl ausgebildet sind, wobei die Festigkeitsträger der radial inneren Arbeitslage in ihrer Ausrichtung einen Winkel α mit 10°≤α≤45° zur Umfangsrichtung U und die Festigkeitsträger der radial äußeren Arbeitslage in ihrer Ausrichtung einen Winkel γ zur Umfangsrichtung U mit 10°≤γ≤45° einschließen, und wobei in Umfangsrichtung U des Fahrzeugreifens gesehen die Festigkeitsträger der radial inneren Arbeitslage eine entgegengesetzte axiale Neigungsrichtung zu den Festigkeitsträgern der radial äußeren Arbeitslage aufweisen, bei dem die radial zwischen diesen beiden Arbeitslagen angeordnete Gürtellage in axialer Richtung A des Fahrzeugluftreifens dreigeteilt aus zwei axialen äußeren Randlagenabschnitten und aus einem axial zwischen diesen angeordneten Mittenlagenabschnitt ausgebildet ist, und bei dem die beiden Randlagenabschnitte als Nullgradlage ausgebildet sind mit in Gummi eingebetteten parallelen - insbesondere fadenförmigen - Festigkeitsträgern, die in ihrer Ausrichtung einen Winkel β mit 0°≤β≤5° zur Umfangsrichtung U einschließen, und bei dem der Mittenlagenabschnitt mit in Gummi eingebetteten Festigkeitsträgern ausgebildet ist, die in ihrer Ausrichtung einen Winkel η mit 5°<η≤90° zur Umfangsrichtung U einschließen, gemäß den Merkmalen von Anspruch 1, wobei radial innerhalb der radial äußeren Arbeitslage zwischen der äußeren Arbeitslage und der Gürtellage eine weitere in axialer Richtung A des Fahrzeugluftreifens aus zwei axialen äußeren Randlagenabschnitten und aus einem axial zwischen diesen angeordneten Mittenlagenabschnitt dreigeteilte Gürtellage ausgebildet ist, wobei die beiden Randlagenabschnitte mit in Gummi eingebetteten Festigkeitsträgern ausgebildet sind, die in ihrer Ausrichtung einen Winkel ζ mit 5°<ζ≤90° zur Umfangsrichtung U einschließen, und wobei der Mittenlagenabschnitt als Nullgradlage ausgebildet ist mit in Gummi eingebetteten parallelen Festigkeitsträgern, die in ihrer Ausrichtung einen Winkel θ mit 0°≤θ≤5° zur Umfangsrichtung U einschließen.

Hierdurch wird durch die beiden Arbeitslagen mit gegenläufig ausgerichteter Neigung ihrer jeweils mit Neigungswinkel von 10° bis 45° zur Umfangsrichtung ausgebildeten Festigkeitsträger der Kreuzverband sichergestellt. In dem für die Gürtelhaltbarkeit wichtigen kritischen Bereich der Gürtelränder und dem für den Abrieb wichtigen an die Gürtelkanten anschließenden Erstreckungsbereich des Gürtels bewirken die beiden als 0°-Lage ausgebildeten Randlagenabschnitte der zwischen den beiden Arbeitslagen ausgebildeten Gürtellage eine hohe Umfangsversteifung beider Arbeitslagen und somit des Gürtels, wodurch eine hohe Dauerhaltbarkeit bei guten Abriebseigenschaften möglich wird. In dem für das Eindringen von Fremdkörpern besonders kritischen mittleren axialen Erstreckungsbereich des Gürtels wird durch die Schräglagenausbildung des Mittenlagenabschnittes der zwischen den Arbeitslagen ausgebildeten Gürtellage eine erhöhte Quersteifigkeit und Verbiegesteifigkeit um die Umfangsrichtung des Gürtels bewirkt, wodurch gerade in dem für das Eindringen von Fremdkörpern kritischen Erstreckungsbereich des Gürtels das Eindringen derartiger Fremdkörper in den Gürtel und somit die Beschädigung des Gürtels erschwert wird. Die Ausbildung des Mittenlagenabschnittes als Schräglage mit Winkel η ihrer Festigkeitsträger mit 5°<η≤90° zur Umfangsrichtung U ermöglicht darüber hinaus eine Reduktion des verwendeten Materials der Festigkeitsträger, wodurch sowohl das Gewicht des Gürtels als auch die Materialkosten reduziert werden können. Somit kann bei guten Abriebseigenschaften und verbesserter Haltbarkeit des Reifens eine verbesserte Quersteifigkeit mit reduziertem Materialaufwand kostengünstig umgesetzt werden.. **Durch die weitere dreigeteilte Lage können die Kräfte aus dem mittleren in den äußeren Gürtelabschnitt besser und gleichmäßiger abgeleitet und Gürtelhaltbarkeit und Abriebsbild weiter verbessert werden.**

Besonders vorteilhaft ist die Ausbildung gemäß den Merkmalen von Anspruch 2, wobei die Randlagenabschnitte jeweils mit einer in axialer Richtung A gemessenen axialen Erstreckung m im Fahrzeugluftreifen mit m ≤ 0,25B ausgebildet ist, wobei B die in axialer Richtung A des Fahrzeugluftreifens gemessene an der radial äußeren Mantelfläche gemessene Laufstreifenbreite ist. Hierdurch wird der mittlere, besonders empfindliche Gürtelabschnitt sehr zuverlässig gegen Durchstöße geschützt

Besonders vorteilhaft ist die Ausbildung gemäß den Merkmalen von Anspruch 3, wobei die radial äußere der beiden Arbeitslagen in ihrer axialen Erstreckung c im Fahrzeugluftreifen kleiner ausgebildet ist als die radial innere der beiden Arbeitslagen, wobei insbesondere die radial äußere der beiden Arbeitslagen zu beiden axialen Seiten hin innerhalb des axialen Erstreckungsbereiches der radial inneren der beiden Arbeitslagen endet. Scherungen zwischen den Arbeitslagen können hierdurch weiter reduziert und die Haltbarkeit des Gürtels erhöht werden.

Besonders vorteilhaft ist die Ausbildung gemäß den Merkmalen von Anspruch 4, wobei die radial zwischen den beiden Arbeitslagen angeordnete Gürtellage in ihrer axialen Erstreckung b im Fahrzeugluftreifen - insbesondere mindestens 10 mm - kleiner ausgebildet ist als jede der beiden Arbeitslagen. Diese umfangsorientierte zwischen den beiden Arbeitslagen sich befindende Gürtellage ist hierdurch liegt hierdurch außerhalb der Bereiche, in denen erfahrungsgemäß die höchsten Scherspannungen auftreten können. Die Gefahr von Kordbrüchen kann weiter reduziert und die Haltbarkeit weiter erhöht werden.

Besonders vorteilhaft ist die Ausbildung gemäß den Merkmalen von Anspruch 5, wobei radial außerhalb der radial äußeren Arbeitslage auf der äußeren Arbeitslage eine weitere Gürtellage mit parallelen in Gummi eingebetteten Festigkeitsträgern ausgebildet ist, wodurch der Gürtel zusätzlich gegen Eindringen von Steinen von außen geschützt wird.

Besonders vorteilhaft ist die Ausbildung gemäß den Merkmalen von Anspruch 6, wobei die weitere Gürtellage als Nullgradlage ausgebildet ist, deren Festigkeitsträger in ihrer Ausrichtung einen Winkel δ zur Umfangsrichtung U des Fahrzeugluftreifens mit 0°≤ δ ≤5°einschließen. Hierdurch wird die gesamte radial äußere Arbeitslage in ihrer Bewegungsfähigkeit zusätzlich beschränkt, wodurch die Haltbarkeit des Gürtels weiter erhöht werden kann und ein Wachstum des Gürtels im mittleren axialen Erstreckungsbereich des Gürtels weiter behindert und dadurch das Abriebsbild weiter verbessert werden kann.

Besonders vorteilhaft ist die Ausbildung gemäß den Merkmalen von Anspruch 7, wobei die weitere Gürtellage in ihrer axialen Erstreckung f im Fahrzeugluftreifen mit (0,2B) ≤ f ≤ (0,5B) ausgebildet ist. Hierdurch wird der zusätzliche Schutz optimiert in dem besonders kritischen und zu schützenden Bereich bewirkt.

Besonders vorteilhaft zur Erhöhung des Schutzes gegen das Eindringen von Steinen ist die Ausbildung gemäß den Merkmalen von Anspruch 8, wobei die Festigkeitsträger der zusätzlichen Gürtellage in ihrer Ausrichtung einen Winkel δ zur Umfangsrichtung U des Fahrzeugluftreifens mit 5°<δ≤90°einschließen.

Besonders vorteilhaft ist die Ausbildung gemäß den Merkmalen von Anspruch 9, wobei radial innerhalb der radial inneren Arbeitslage zwischen der Karkasse und der radial inneren Arbeitslage eine weitere Gürtellage mit parallelen in Gummi eingebetteten Festigkeitsträgern ausgebildet ist, deren Festigkeitsträger in ihrer Ausrichtung einen Winkel ε zur Umfangsrichtung U des Fahrzeugluftreifens - insbesondere mit 45°≤ε≤90° - einschließen. Hierdurch kann die Einleitung der Kräfte aus der Karkasse in das Gürtelpaket verbessert und die Haltbarkeit des Reifens zusätzlich erhöht werden.

Besonders vorteilhaft ist die Ausbildung gemäß den Merkmalen von Anspruch 10, wobei der Mittenlagenabschnitt dieser dreigeteilten Gürtellage in seiner axialen Erstreckung w im Fahrzeugluftreifen mit (0,2B) ≤ w ≤ (0,5B) ausgebildet ist, wodurch die Kräfte optimiert aus dem mittleren Gürtelabschnitt in den äußeren Gürtelabschnitt abgeleitet werden und die Gürtelhaltbarkeit verbessert werden kann.

Besonders vorteilhaft ist die Ausbildung gemäß den Merkmalen von Anspruch 11, wobei die Festigkeitsträger der Arbeitslagen Festigkeitsträger aus Stahl sind, wodurch in einfacher Weise eine besonders hohe Umfangssteifigkeit und eine weiter verbesserte Gürtelhaltbarkeit ermöglicht wird.

Besonders vorteilhaft ist die Ausbildung gemäß den Merkmalen von Anspruch 12, wobei die Festigkeitsträger einer oder mehrerer - insbesondere aller - Nullgradlage(n) Festigkeitsträger aus Stahl sind, wodurch in einfacher Weise eine besonders hohe Umfangssteifigkeit und eine weiter verbesserte Gürtelhaltbarkeit ermöglicht wird.

Besonders vorteilhaft ist die Ausbildung gemäß den Merkmalen von Anspruch 13, wobei die Festigkeitsträger einer oder mehrerer - insbesondere aller - Nullgradlage(n) High-Elongation-Korde (HE) sind, wodurch in einfacher Weise Erhebungen des Gürtels im Bauprozess des Reifens ermöglicht werden.

Besonders vorteilhaft ist die Ausbildung gemäß den Merkmalen von Anspruch 14, wobei die Festigkeitsträger der zusätzlichen Gürtellage Festigkeitsträger aus Stahl sind, wodurch die Kraftübertragung begünstigt wird und die Schutzfunktion gegen Durchstoßen erhöht werden kann.

Die Erfindung wird im Folgenden an Hand der in den Fig.1 bis Fig.10 dargestellten Ausführungsbeispiele eines Nutzfahrzeugluftreifens radialer Bauart erläutert, wobei es sich bei den Figuren 1 bis 8 um nicht erfindungsgemäße Ausführungsformen zum allgemeinen Verständnis handelt. Darin zeigen
- Fig.1: eine Querschnittdarstellung eines Nutzfahrzeugluftreifens radialer Bauart,
- Fig.2: eine Draufsicht auf den Gürtel des Reifens von Fig.1 gemäß Schnitt II-II von Fig.1, wobei zur Vereinfachung übersichtlichkeitshalber keine weiteren Bauteile eingezeichnet sind,
- Fig.3: eine Querschnittdarstellung eines Nutzfahrzeugluftreifens radialer Bauart entsprechend der Darstellung von Fig.1 mit alternativer Ausführung des Gürtels,
- Fig.4: Draufsicht auf den Gürtel des Reifens von Fig.3 in Schnittdarstellung gemäß Schnitt IV-IV von Figur 3, wobei zur Vereinfachung übersichtlichkeitshalber keine weiteren Bauteile des Reifens dargestellt sind,
- Fig.5: einen Ausschnitt der Querschnittdarstellung eines Nutzfahrzeugluftreifens mit weiterer alternativer Ausführung des Gürtels,
- Fig.6: Draufsicht auf den Gürtel des Reifens von Fig.5 gemäß Schnitt VI-VI von Fig.5, wobei zur Vereinfachung übersichtlichkeitshalber keine weiteren Bauteile des Reifens eingetragen sind,
- Fig.7: einen Ausschnitt der Querschnittdarstellung eines Nutzfahrzeugluftreifens mit weiterer alternativer Ausführung des Gürtels,
- Fig.8: Draufsicht auf den Gürtel des Reifens von Fig.7 gemäß Schnitt VIII-VIII von Fig.7, wobei zur Vereinfachung übersichtlichkeitshalber keine weiteren Bauteile des Reifens dargestellt sind,
- Fig.9: einen Ausschnitt der Querschnittdarstellung eines erfindungsgemäßen Nutzfährzeugluftreifens mit weiterer alternativer Ausführung des Gürtels
- Fig.10: Draufsicht auf den Gürtel des Reifens von Figur 9 gemäß Schnitt X-X von Fig.9, wobei zur Vereinfachung übersichtlichkeitshalber keine weiteren Bauteile des Reifens dargestellt sind.

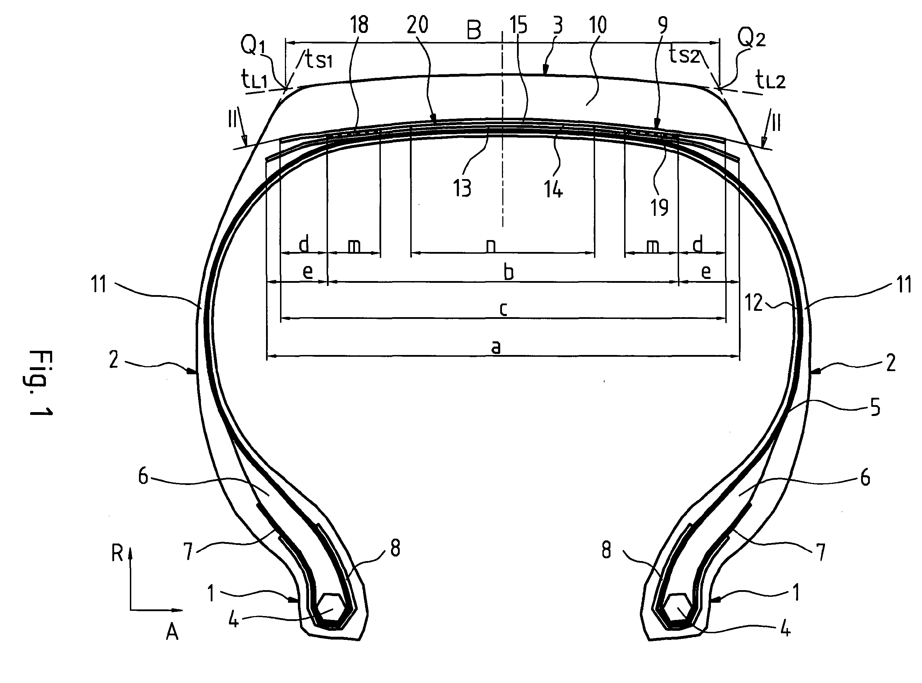

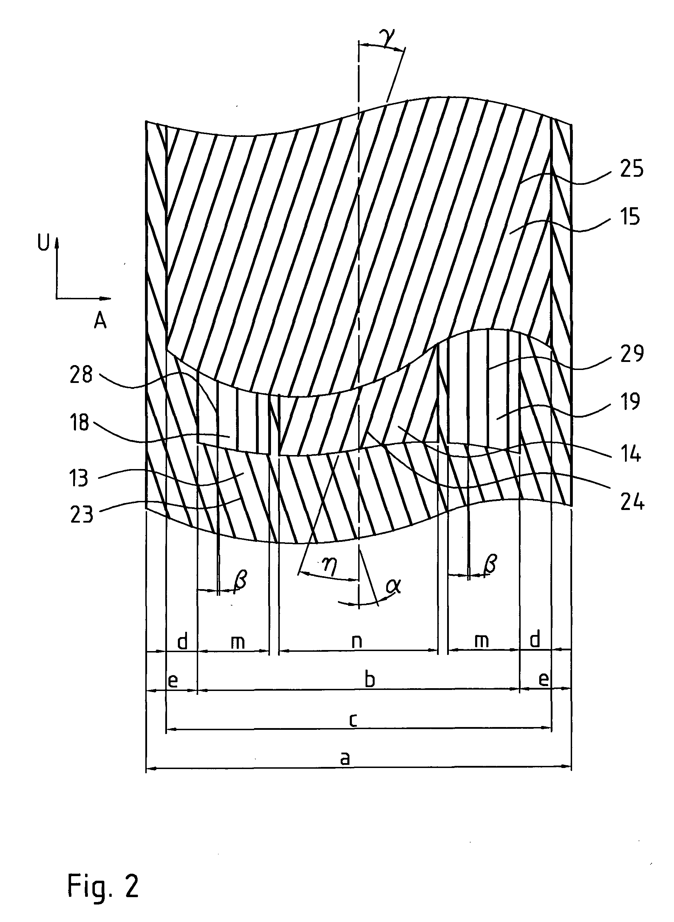

Fig.1 und Fig.2 zeigen einen Nutzfahrzeugluftreifen radialer Bauart mit zwei in radialer Richtung R des Fahrzeugreifens erstreckten Seitenwänden 2 und einem axial dazwischen ausgebildeten Kronenbereich 3. Die Seitenwände 2 sind an ihrem in radialer Richtung R nach innen weisenden Erstreckungsende jeweils mit einem Wulstbereich 1 ausgebildet, in dem ein in Umfangsrichtung U zugfester über den Umfang des Reifens in Umfangsrichtung U erstreckter Wulstkern 4 bekannter Art ausgebildet ist. Die Wulstkerne 4 sind in bekannter Weise aus in Umfangsrichtung U des Fahrzeugluftreifens erstrecktem in Gummi eingebettetem Draht gewickelt ausgebildet. Auf den Wulstkernen 4 ist in herkömmlicher Weise ein im Querschnitt dreiecksförmiger Apex (Kernreiter) 6 aus hartem Gummimaterial ausgebildet. Der Fahrzeugluftreifen ist mit einer Karkasse 5 ausgebildet, welche sich ausgehend vom im linken Wulstbereich 1 des Fahrzeugluftreifens ausgebildeten Wulstkern 4 in radialer Richtung R des Fahrzeugluftreifens nach außen durch die linke Seitenwand 2 hindurch bis zum Kronenbereich 3 und im Kronenbereich 3 in axialer Richtung A des Fahrzeugluftreifens bis zur rechten Seitenwand 2 und in der rechten Seitenwand 2 des Fahrzeugluftreifens nach radial innen bis zum im Wulstbereich 1 der rechten Seitenwand 2 ausgebildeten Wulstkern 4 erstreckt. Die Karkasse ist in beiden Wulstbereichen 1 jeweils von entlang der axialen Innenseite des Wulstkernes 4 bis zur radialen Innenseite des jeweiligen Wulstkernes 4, dann in Verlängerung in axialer Richtung entlang des radialen Innenseite des Wulstkernes 4 bis zur axialen Außenseite des Wulstkernes 4 und dann in Verlängerung auf der axialen Außenseite des Wulstkernes 4 als Umschlagsteil 7 nach radial außen erstreckt ausgebildet. Die Karkasse 5 erstreckt sich mit ihrem Umschlagsteil 7 entlang der axialen Außenseite des Apex 6 und endet auf der axialen Außenseite des Apex 6. Die Karkasse 5 ist in bekannter - nicht näher dargestellter Weise - aus einer in Umfangsrichtung U über den gesamten Umfang des Fahrzeugluftreifens erstreckten Karkassenlage mit in Gummi eingebetteten parallelen Korden - beispielsweise Stahlkorden - , welche sich im Bereich der Seitenwände 2 im Wesentlichen in radialer Richtung R und im Kronenbereich im Wesentlichen in axialer Richtung A des Fahrzeugluftreifens erstrecken, ausgebildet. Vom linken Wulstbereich 1 bis zum rechten Wulstbereich 1 erstreckt sich auf der zur Reifeninnenseite hinweisenden Seite der Karkasse 5 eine Innenschicht 12 aus bekanntem besonders luftundurchlässigem Gummimaterial. Im Wulstbereich 1 ist jeweils ein zusätzlicher Wulstverstärkerstreifen 8, welcher sich über den gesamten Umfang des Fahrzeugluftreifens erstreckt, auf der vom Wulstkern 4 wegweisenden Seite der Karkasse 5 ausgebildet. Der Wulstverstärkerstreifen 8 ist beispielsweise ein aus parallelen Festigkeitsträgern textiler oder metallischer Bauart in Gummi eingebetteter Materialstreifen.

Im Bereich der Reifenkrone 3 ist in radialer Richtung R des Fahrzeugluftreifens außerhalb der Karkasse 5 auf der Karkasse 5 ein über den gesamten Umfang des Fahrzeugluftreifens in Umfangsrichtung U und in axialer Richtung A von der linken Reifenschulter bis zu der rechten Reifenschulter erstreckter Gürtel 9 ausgebildet, welcher aus drei in radialer Richtung R übereinander und aufeinanderliegend angeordneten Gürtellagen 13, 20 und 15 ausgebildet ist. Radial außerhalb des Gürtels 9 ist auf dem Gürtel 9 ein über den gesamten Umfang des Fahrzeugluftreifens in Umfangsrichtung U erstreckter und in axialer Richtung A von der linken Reifenschulter bis zur rechten Reifenschulter erstreckter profilierter Laufstreifen 10 bekannter Art ausgebildet, welche den Gürtel 9 vollständig bedeckt. Im Bereich der Reifenseitenwände 2 ist auf der axial vom Reifen weg weisenden Seite der Karkasse 5 in bekannter Weise ein Seitenwandgummistreifen 11 ausgebildet, welcher sich in radialer Richtung R vom Wulstbereich 1 bis zum profilierten Laufstreifen 10 im Kronenbereich 3 erstreckt.

Der Laufstreifen 10 ist mit einer in axialer Richtung A des Fahrzeugluftreifens an der radial nach außen gerichteten Oberfläche des Reifens, welche den Berührkontakt zur Straße bildet, mit einer in axialer Richtung A gemessenen Laufstreifenbreite B ausgebildet.

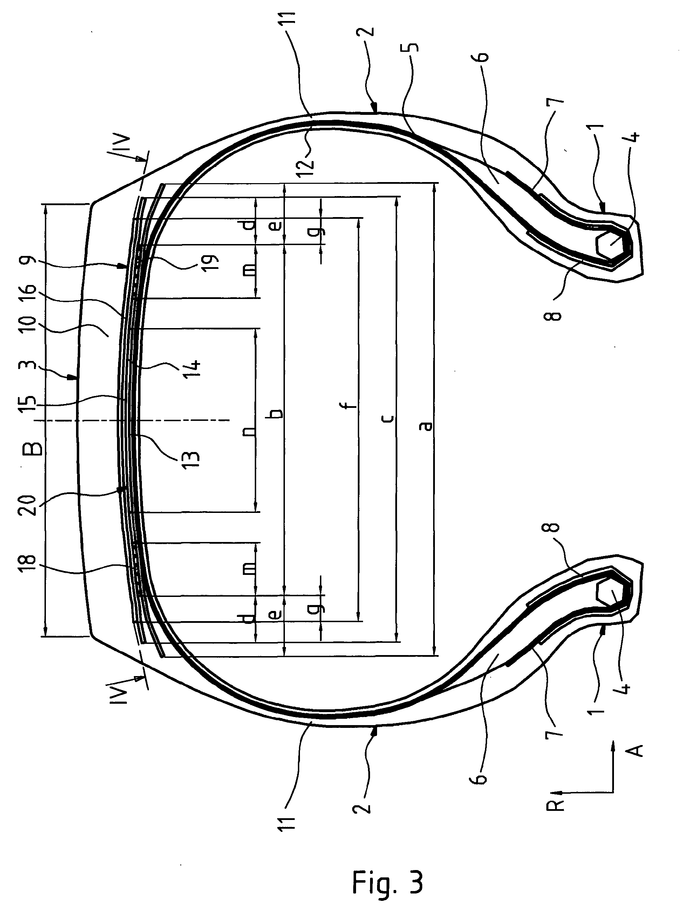

Bei Nutzfahrzeugluftreifen, bei denen - wie z. B. in Fig.3, Fig.5, Fig.7 und Fig.9 dargestellt ist - der Übergang zwischen der Mantelflächenkontur der nach radial außen weisenden Oberfläche des Laufstreifens 10 und der Mantelflächenkontur der jeweils nach axial außen vom Reifen weg weisenden Seitenwand 2 des Reifens als Schnittkante ausgebildet ist, ist die axiale Breite B die in den Querschnittsebenen, die die Reifenachse beinhalten, jeweils der axialen Abstand des zwischen dem aus der Mantelflächenkontur der nach radial außen weisenden Oberfläche des Laufstreifens 10 und der der Mantelflächenkontur der nach axial außen vom Reifen weg weisenden Seite der einen Reifenseitenwand 2 gebildeten Schnittpunkt und dem aus der nach radial außen weisenden Oberfläche des Laufstreifens 10 und der nach axial außen vom Reifen weg weisenden Seite der anderen Reifenseitenwand 2 gebildeten Schnittpunkt.

Bei Fahrzeugluftreifen, bei denen - wie beispielsweise in Fig.1 dargestellt ist - der Übergang zwischen der Mantelflächenkontur der nach radial außen weisenden Oberfläche des Laufstreifens 10 und der der Mantelflächenkontur der jeweils nach axial außen vom Reifen weg weisenden Seitenwand 2 des Reifens abgerundet ausgebildet ist, ist die Breite B in den Querschnittsebenen, die die Reifenachse beinhalten, der axiale Abstand der beiden Schnittpunkte Q₁ und Q₂ voneinander. Dabei ist der Schnittpunkt Q₁ in der Querschnittsebene der Schnittpunkt von der an die Mantelflächenkontur der radial äußeren Oberfläche in axialer Richtung zur linken Seitenwand gebildeten tangentialen Weiterführung t_{L1} und der an die Mantelflächenkontur der vom Reifen weg weisende Oberfläche der linken Seitenwand 11 in radialer Richtung R nach außen gebildeten tangentialen Weiterführung t_{S1}. Der Schnittpunkt Q₂ ist in der Querschnittsebene der Schnittpunkt von der an die Mantelflächenkontur der radial äußeren Oberfläche in axialer Richtung zur rechten Seitenwand gebildeten tangentialen Weiterführung t_{L2} und der an die Mantelflächenkontur der vom Reifen weg weisende Oberfläche der rechten Seitenwand 11 in radialer Richtung R nach außen gebildeten tangentialen Weiterführung t_{S2}.

Der in Fig.1 dargestellte Gürtel 9 ist aus drei von radial innen nach radial außen übereinander angeordneten Gürtellagen 13, 20 und 15 ausgebildet, von denen die radial benachbarten Gürtellagen 13 und 20 und die radial benachbarten Gürtellagen 20 und 15 über ihre gesamte gemeinsame Erstreckung in Berührkontakt zueinander ausgebildet sind. Die Gürtellagen 13, 20 und 15 sind jeweils über den gesamten Umfang des Fahrzeugluftreifens in Umfangsrichtung U erstreckt ausgebildet.

Die radial innere Gürtellage 13 und die radial äußere Gürtellage 15 sind als Arbeitslagen des Reifens ausgebildet und erstrecken sich in axialer Richtung A von linker Reifenschulter bis zur rechten Reifenschulter. Die Arbeitslage 13 ist aus einer Lage von einer Vielzahl von in Gummi eingebetteten parallelen Stahlkorden 23 ausgebildet, welche sich über die gesamte in axialer Richtung A gemessene Breite a der Gürtellage 13 im Wesentlichen geradlinig erstrecken und einen Neigungswinkels α zur Umfangsrichtung U einschließen mit 10° ≤ α < 45°. Die Arbeitslage 15 ist aus einer Lage von einer Vielzahl von in Gummi eingebetteten parallelen Stahlkorden 25 ausgebildet, welche sich über die gesamte axiale Breite c der Gürtellage 15 im Wesentlichen geradlinig erstrecken und einen Neigungswinkel γ zur Umfangsrichtung U einschließen mit 10° ≤ γ ≤ 45°. Die Neigungsrichtung der Festigkeitsträger 25 der Arbeitslagen 15 längs der Umfangsrichtung U gesehen ist in entgegengesetzter axialer Richtung A zur Neigungsrichtung der Festigkeitsträger 23 der Arbeitslage 13 ausgebildet. Die beiden Arbeitslagen 13 und 15 bilden einen Kreuzverband. Die Breiten a und c der beiden Arbeitslagen 13 und 15 sind mit a > c ausgebildet.

Die radial zwischen den beiden Arbeitslagen 15 und 13 ausgebildete Gürtellage 20 ist in axialer Richtung A des Fahrzeugluftreifens dreigeteilt aus zwei axial äußeren Randlagenabschnitten 18 und 19 und aus einem axial zwischen diesen beiden Randlagenabschnitten 18 und 19 angeordneten Mittenlagenabschnitt 14 ausgebildet. Der Mittenlagenabschnitt 14 ist aus einer Vielzahl von parallel zueinander angeordneten in Gummi eingebetteten im Wesentlichen geradlinigen Stahlkorden 24 ausgebildet, die sich über die gesamte axiale Erstreckung des Mittenlagenabschnitts 14 erstrecken und die einen Neigungswinkel η mit zur Umfangsrichtung U einschließen mit 5° < η ≤ 90°. Der Mittenlagenabschnitt 14 erstreckt sich in axialer Richtung A über eine Breite n. Die beiden Randlagenabschnitte 18 und 19 sind jeweils aus parallel zueinander ausgerichteten, über den gesamten Umfang des Fahrzeugluftreifens erstreckten, in Gummi eingebetteten und geradlinigen Festigkeitsträgern 28 ausgebildet, welche einen Neigungswinkel β zur Umfangsrichtung U einschließen mit 0° ≤ β ≤ 5°. Die Randlagenabschnitte 18 und 19 sind somit als Nullgradlage ausgebildet. Die beiden Randlagenabschnitte 18 und 19 erstrecken sich in axialer Richtung A jeweils über eine Breite m. Der Randlagenabschnitt 18 und der Mittenlagenabschnitt 14 sind axial nebeneinander ohne axiale Überschneidung angeordnet. Der Randlagenabschnitt 19 und der Mittenlagenabschnitt 14 sind ebenfalls axial nebeneinander ohne axiale Überschneidung angeordnet. Die aus Mittenlagenabschnitt 14 und den Randlagenabschnitten 18 und 19 gebildete Gürtellage 20 erstreckt sich in axialer Richtung A über eine Breite b mit b < c < a. Die radial äußere Arbeitslage 15 erstreckt sich dabei zu beiden axialen Seiten hin jeweils mit ihren Lagenrändern als Überhang mit einem in axialer Richtung A gemessenen Erstreckungsmaß d über die beiden axialen Gürtelkantenränder der Gürtellage 20 hinaus. Die Arbeitslage 13 erstreckt sich mit ihren beiden axialen Lagenrändern als Überhang jeweils über den jeweiligen Gürtelkantenrand der Gürtellage 20 über ein in axialer Richtung A gemessenes Erstreckungsmaß e hinaus, wobei e > d. Das Erstreckungsmaß d des Überhangs ist dabei mit d ≥ 5 mm ausgebildet. Die Breite b ist mindestens 10 mm kleiner ausgebildet als die Breite c.

Die Breite m der Gürtelrandlagenabschnitte 18 und 19 ist mit 0,05 B ≤ m < 0,25 B ausgebildet.

Im dargestellten Ausführungsbeispiel ist zwischen dem Mittenlagenabschnitt 14 und den beiden Randlagenabschnitten 18 und 19 jeweils ein Abstand ausgebildet. In anderer nicht dargestellter Ausführung ist der Mittenlagenabschnitt 14 jeweils in axialem Berührkontakt zum Randlagenabschnitt 18 und zum Randlagenabschnitt 19 ausgebildet.

Die Festigkeitsträger 28 und 29 der als Nullgradlage ausgebildeten Randlagenabschnitte 18 und 19 sind Stahlkorde bekannter Art. In einer anderen Ausführung sind die Festigkeitsträger 28 und 29 der als Nullgradlage ausgebildeten Randlagenabschnitte 18 und 19 Stahlkorde, die in bekannter Weise als High-Elongation-Kord (HE-Kord) ausgebildet sind. Derartige hochdehnbare High-Elongation-Korde weisen einen E-Modul bei einer Dehnung zwischen 0% und 2 % auf, der geringer ist als ihr E-Modul bei einer Dehnung mit mehr als 2 %.

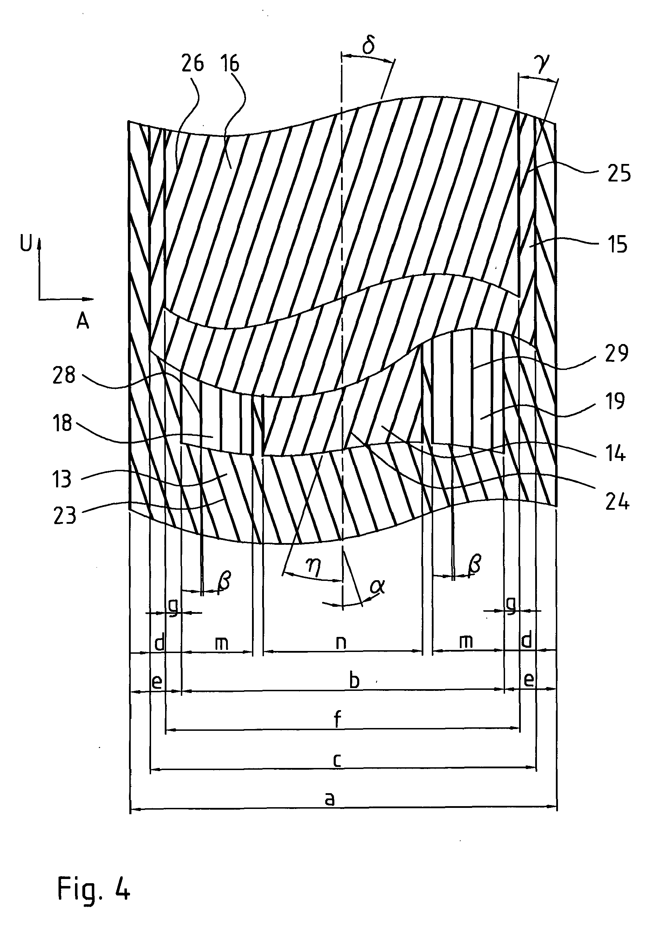

Fig.3 und Fig.4 zeigen einen Nutzfahrzeugluftreifen mit alternativer Ausbildung des Gürtels 9. Der Gürtel 9 ist dabei wie bei den in den Fig.1 und Fig.2 dargestellten und erläuterten Ausbildungen und zusätzlich mit einer weiteren Gürtellage 16 ausgebildet, die sich in Umfangsrichtung U über den gesamten Umfang des Fahrzeugluftreifens und in axialer Richtung A von linker Reifenschulter bis zur rechten Reifenschulter erstreckt und die radial außerhalb der radial äußeren Arbeitslage 15 über ihre gesamte Erstreckung in Berührkontakt zur Arbeitslage 15 steht. Die Gürtellage 16 ist in axialer Richtung A mit einer Breite f ausgebildet mit b < f < c. Die Gürtellage 16 ist aus einer Vielzahl von parallel zueinander angeordneten in Gummi eingebetteten geradlinigen Festigkeitsträgern 26 ausgebildet, die mit einem Neigungswinkel δ mit 5° < δ ≤ 90° zur Umfangsrichtung U ausgerichtet sind. Die Festigkeitsträger 26 sind Stahlkorde. Die Gürtellage 16 erstreckt sich zu beiden axialen Seiten mit ihren beiden Gürtellagenrändern in axialer Richtung A bis über die axiale Position des nächstliegenden Gürtelkantenrandes der Gürtellage 20 mit einem Erstreckungsmaß g des Überhangs hinaus mit g ≤ d.

Die Neigungsrichtung der Festigkeitsträger 26 entspricht in der dargestellten Ausführung der Neigungsrichtung der Festigkeitsträger 25 der radial äußeren Arbeitslage 15.

In anderer nicht dargestellter Ausführung ist die Neigungsrichtung der Festigkeitsträger 26 entgegengesetzt zur Neigungsrichtung der Festigkeitsträger 25 der radial äußeren Arbeitslage 13 gewählt.

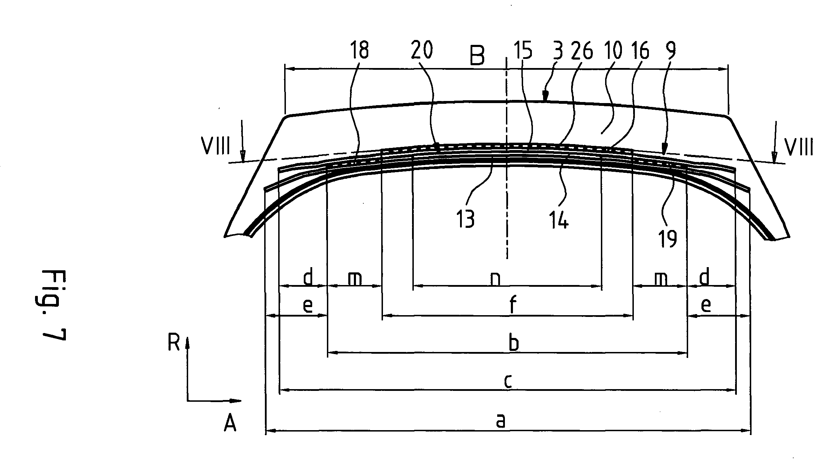

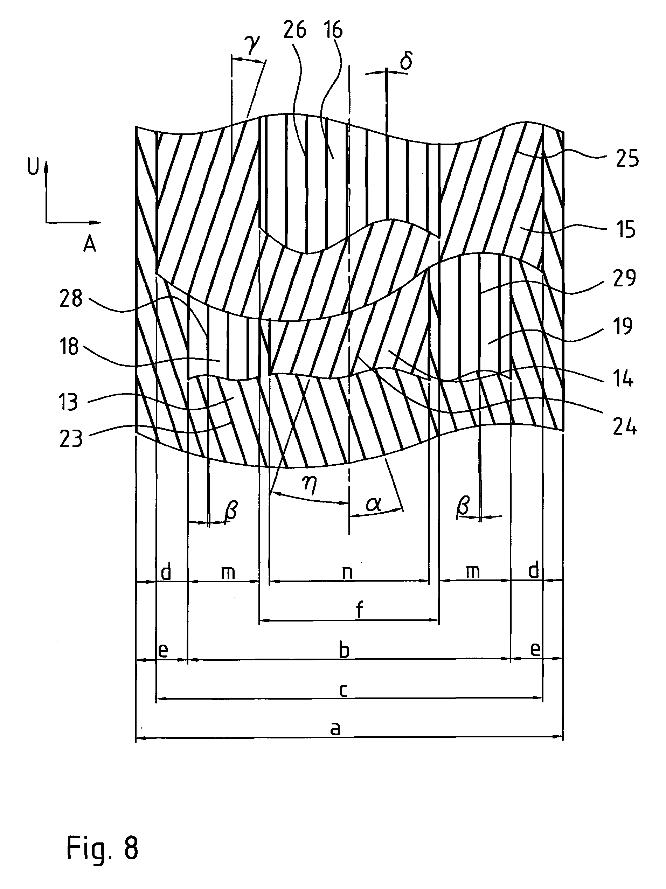

Fig.7 und Fig.8 zeigen eine Ausführung des Gürtels, der wie der Gürtel der Fig.3 und Fig.4 ausgebildet ist, wobei die Festigkeitsträger 26 der zusätzlichen Gürtellage 16 im Wesentlichen in Umfangsrichtung, d.h. mit einem Neigungswinkel δ zur Umfangsrichtung mit 0° ≤ δ ≤ 5° ausgerichtet und über den gesamten Umfang des Fahrzeugluftreifens erstreckt ausgebildet sind. Der Gürtel 16 ist in dieser Ausführung mit einer in axialer Richtung gemessenen Gürtelbreite f ausgebildet mit n < f < b. Die Festigkeitsträger 26 sind in dieser Ausführung als Stahlkorde ausgebildet. In anderer Ausführung sind die Festigkeitsträger 26 Stahlkorde, die in bekannter Weise als High-Elongation-Kord (HE-Kord) ausgebildet sind. Derartige hochdehnbare High-Elongation-Korde weisen einen E-Modul bei einer Dehnung zwischen 0% und 2 % auf, der geringer ist als ihr E-Modul bei einer Dehnung mit mehr als 2 %.

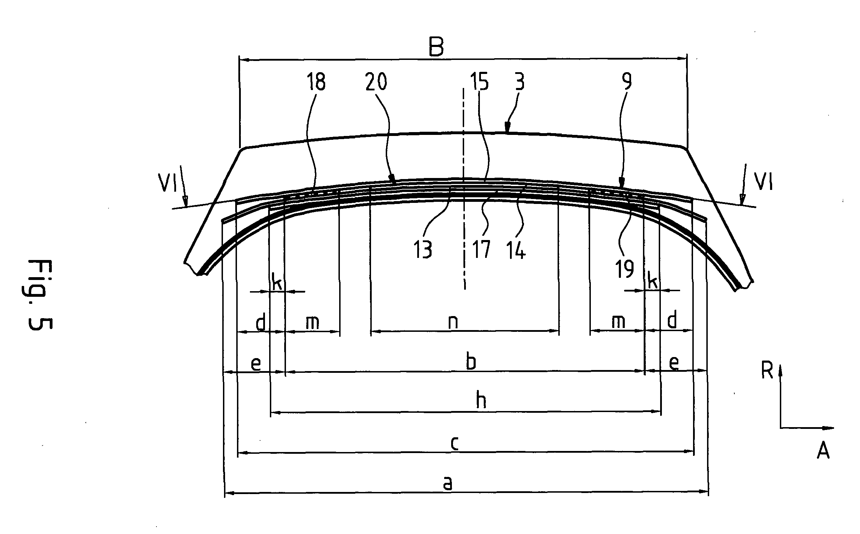

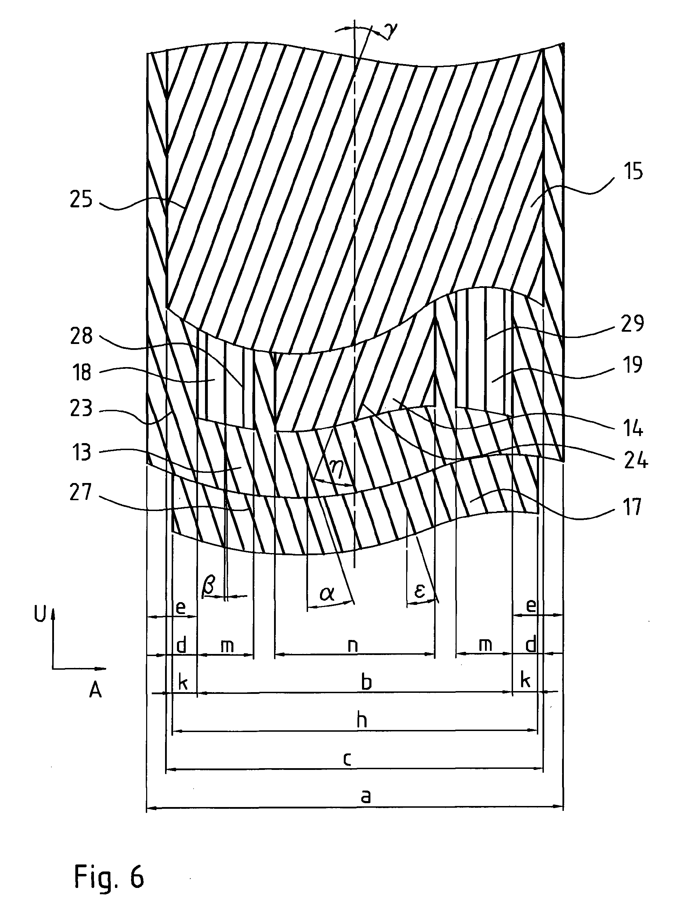

Fig.5 und Fig.6 zeigen einen Nutzfahrzeugluftreifen mit weiterer alternativer Ausbildung des Gürtels 9. Der Gürtel 9 ist dabei wie bei den in den Fig. 1 und Fig.2 dargestellten und erläuterten Ausbildungen und zusätzlich radial unterhalb der inneren Arbeitslage 13 zwischen radial innerer Arbeitslage 13 und Karkasse 5 mit einer weiteren Gürtellage 17 ausgebildet, welche sich in Umfangsrichtung U über den gesamten Umfang des Fahrzeugluftreifens und in axialer Richtung A von Reifenschulter zu Reifenschulter über eine Breite h erstreckt und in ihrer gesamten Erstreckung in unmittelbarem Berührkontakt zur Arbeitslage 13 steht. Die Gürtellage 17 ist aus einer Vielzahl von parallelen nebeneinander angeordneten in Gummi eingebetteten im Wesentlichen geradlinig ausgerichteten Stahlkorden 27 ausgebildet, welche sich unter einen Neigungswinkel ε mit 45° ≤ ε ≤ 90° zur Umfangsrichtung ausgerichtet über die gesamte axiale Breite h der Gürtellage 17 erstrecken. Die Breite h der Gürtellage 17 ist mit b < h < c < a ausgebildet. Die Gürtellage 17 erstreckt sich in axialer Richtung A mit ihren axialen Gürtellagenrändern jeweils über ein axiales Erstreckungsmaß k über den nächstliegenden Gürtellagenrand der Gürtellage 30 hinaus mit k < d < e. Die Neigungsrichtung der Festigkeitsträger 27 entspricht in der dargestellten Ausführung der Neigungsrichtung der Festigkeitsträger 23 der radial inneren Arbeitslage 13.

In anderer nicht dargestellter Ausführung ist die Neigungsrichtung der Festigkeitsträger 27 entgegengesetzt zur Neigungsrichtung der Festigkeitsträger 23 der radial inneren Arbeitslage 13 gewählt.

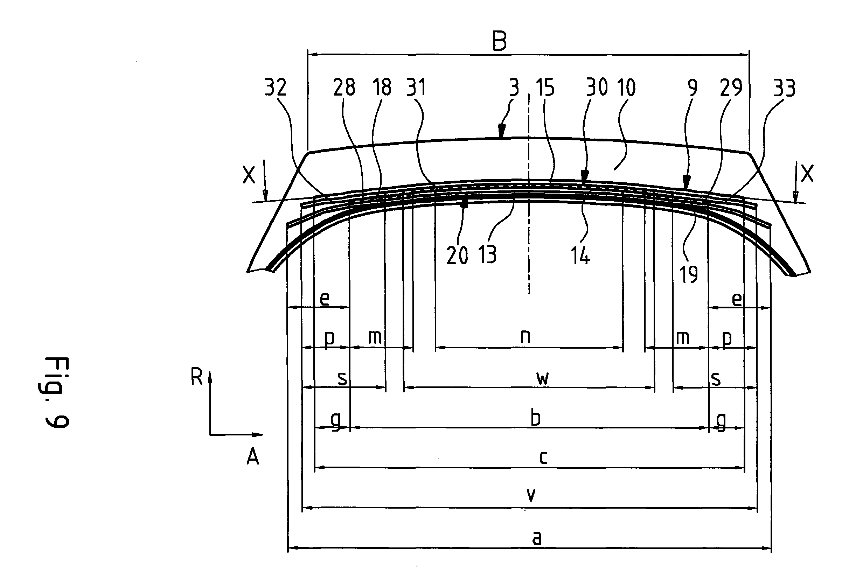

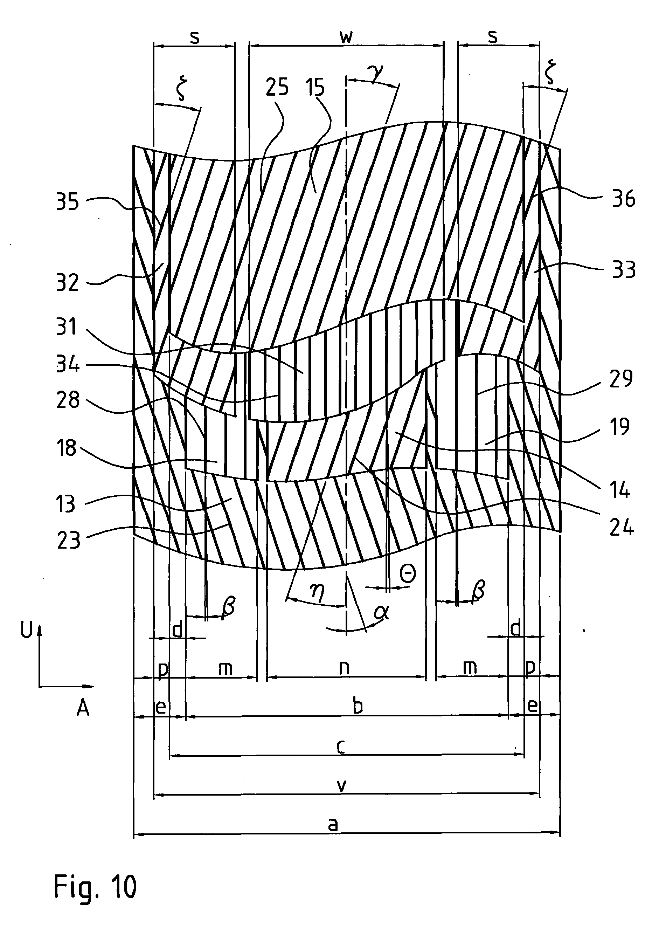

Fig.9 und Fig.10 zeigen einen Nutzfahrzeugluftreifen mit weiterer alternativer Ausbildung des Gürtels 9. Der Gürtel 9 ist dabei wie bei den in den Fig.1 und Fig.2 dargestellten und erläuterten Ausbildungen ausgebildet, wobei jedoch zusätzlich zur dreigeteilten Gürtellage 20 eine weitere dreigeteilte Gürtellage 30 radial zwischen der dreigeteilten Gürtellage 20 und der radial äußeren Arbeitslage 15 ausgebildet ist. Die dreigeteilte Gürtellage 30 erstreckt sich in axialer Richtung A von Reifenschulter zur Reifenschulter mit einer in axialer Richtung gemessenen Breite v und in Umfangsrichtung U über den gesamten Umfang des Fahrzeugluftreifens. Die Gürtellage 30 ist in ihrer gesamten Erstreckung in direktem Berührkontakt zur Arbeitslage 15 und im Wesentlichen auch zur Gürtellage 20. Die dreigeteilte Gürtellage 30 ist in axialer Richtung A aus zwei axial äußeren Randlagenabschnitten 32 und 33 und aus einem axial zwischen diesen Randlagenabschnitten 32 und 33 angeordneten Mittenlagenabschnitten 31 ausgebildet. Der Mittenlagenabschnitt 31 erstreckt sich in axialer Richtung A über eine Breite w mit (0,2 B) ≤ w ≤ (0,5 B). Die beiden Randlagenabschnitte 32 und 33 erstrecken sich in axialer Richtung A jeweils über eine Breite s.

Die Randlagenabschnitte 32 und 33 sind jeweils aus einer Vielzahl von nebeneinander angeordneten über den gesamten Umfang des Fahrzeugluftreifens erstreckten, parallel zueinander ausgerichteten und in Gummi eingebetteten geradlinigen Stahlkorden 35 bzw. 36 ausgebildet, welche einen Winkel ζ mit 5°<ζ≤90° - beispielsweise mit ζ = 30° - zur Umfangsrichtung U einschließen. Der Mittenlagenabschnitt 31 ist aus parallel zueinander angeordneten in Gummi eingebetteten geradlinigen Festigkeitsträgern 34 ausgebildet, welche mit einem Neigungswinkel θ mit 0°≤θ≤5° zur Umfangsrichtung U ausgerichtet sind und sich somit im Wesentlichen in Umfangsrichtung U erstrecken. Der Mittenlagenabschnitt 31 bildet somit einen Nullgradlagenabschnitt. Der Mittenlagenabschnitt 31 ist mit den beiden Randerstreckungsabschnitten 32 bzw. 33 jeweils axial nebeneinander ohne axiale Überlappung ausgebildet. Im dargestellten Ausführungsbeispiel ist der Mittenlagenabschnitt 31 jeweils mit axialem Abstand zu den beiden Randerstreckungsabschnitten 32 bzw. 33 ausgebildet. In anderer, nicht dargestellter Ausführung ist der Mittenlagenabschnitt 31 und der Randlagenabschnitt 32 ebenso wie der Mittenlagenabschnitt 31 und der Randlagenabschnitt 33 jeweils in axialem Berührkontakt zueinander ausgebildet. Die Breite v der Gürtellage 30 ist dabei mit c < v < a ausgebildet. Die axiale Breite w des Mittenlagenabschnitts 31 der Gürtellage 30 ist größer gewählt als die Breite n des Mittenlagenabschnitts 14 der Gürtellage 20, d. h. w > n. Der Mittenlagenabschnitt 31 der Gürtellage 30 erstreckt sich dabei mit seiner Breite w im dargestellten Ausführungsbeispiel in axialer Richtung bis auf die Randlagenabschnitte 18 und 19 der Gürtellage 20. Die Gürtellage 30 erstreckt sich in beide axiale Richtungen mit ihren axialen Gürtellagenrändern bis in einen Abstand p von dem jeweils nächstliegenden Gürtellagenrand der Gürtellage 20 über die Gürtellage 20 hinaus.

Die Festigkeitsträger 34 sind in dieser Ausführung als Stahlkorde ausgebildet. In anderer Ausführung sind die Festigkeitsträger 34 Stahlkorde, die in bekannter Weise als High-Elongation-Kord (HE-Kord) ausgebildet sind. Derartige hochdehnbare High-Elongation-Korde weisen einen E-Modul bei einer Dehnung zwischen 0% und 2 % auf, der geringer ist als ihr E-Modul bei einer Dehnung mit mehr als 2 %.

In einer weiteren alternativen nicht dargestellter Ausführung eines Nutzfahrzeugluftreifens ist der Gürtel 9 entsprechend den in den Fig.5 und Fig.6 dargestellten und erläuterten Ausführungen mit den Gürtellagen 17, 13, 20 und 15 und zusätzlich mit einer radial äußeren Gürtellage 16, wie sie beispielsweise in den Fig.3 und Fig.4 dargestellt und erläutert wurde, ausgebildet.

In einer weiteren alternativen nicht dargestellten Ausführung eines Nutzfahrzeugluftreifens ist der Gürtel 9 entsprechend den in den Fig.5 und Fig.6 dargestellten und erläuterten Ausführungen mit den Gürtellagen 17, 13, 20 und 15 und zusätzlich mit einer radial äußeren Gürtellage 16, wie sie beispielsweise in den Fig.7 und Fig.8 als Nullgradlage dargestellt und erläutert wurde, ausgebildet.

In weiterer alternativer Ausbildung eines Nutzfahrzeugluftreifens ist der in den Fig.9 und Fig.10 ausgebildete Gürtel 9 zusätzlich mit einer radial inneren Gürtellage 17, wie sie im Zusammenhang mit den Fig. 5 und 6 dargestellt und erläutert wurde, und/oder mit einer radial äußere Gürtellage 16, wie sie beispielsweise im Zusammenhang mit den Fig.3 und Fig.4 oder wie sie beispielsweise im Zusammenhang mit den Fig.7 und Fig.8 als Nullgradlage dargestellt und erläutert wurde, ausgebildet.

In dem oben genannten Ausführungsbeispiel sind die als Nullgradlagen ausgebildeten Gürtellagen bzw. Gürtellagenabschnitte jeweils durch ein schraubenförmiges Wickeln von einem oder mehreren parallelen in Kautschuk eingebetteten Festigkeitsträgern um die Gürtelachse mit definiertem axialem Vorschub während des Wickelns und somit gespult hergestellt. In einer Ausführung werden dabei einzelne in Kautschuk eingebettete Festigkeitsträger gespult aufgebracht. In anderer Ausführung erfolgt das Herstellen der jeweiligen Nullgradlage durch schraubenförmiges überlappungsfreies Wickeln von bandförmigen Kautschukstreifen, in denen nebeneinander mehrere z.B. drei oder fünf Festigkeitsträger eingebettet sind.

### Bezugszeichenliste

### (Teil der Beschreibung)

- 1: Wulstbereich
- 2: Seitenwand
- 3: Kronenbereich
- 4: Wulstkern
- 5: Karkasse
- 6: Apex (Kernreiter)
- 7: Karkassenumschlag
- 8: Wulstverstärkungsstreifen
- 9: Gürtel
- 10: Profilierter Laufstreifen
- 11: Seitenwandgummistreifen
- 12: Innenschicht
- 13: Gürtellage (Arbeitslage)
- 14: Mittenlagenabschnitt
- 15: Gürtellage (Arbeitslage)
- 16: Gürtellage
- 17: Gürtellage
- 18: Randlagenabschnitt (Nullgradlage)
- 19: Randlagenabschnitt (Nullgradlage)
- 20: Gürtellage
- 23: Festigkeitsträger
- 24: Festigkeitsträger
- 25: Festigkeitsträger
- 26: Festigkeitsträger
- 27: Festigkeitsträger
- 28: Festigkeitsträger
- 29: Festigkeitsträger
- 30:
- 31: Mittenlagenabschnitt (Nullgradlage)
- 32: Randlagenabschnitt
- 33: Randlagenabschnitt
- 34: Festigkeitsträger
- 35: Festigkeitsträger
- 36: Festigkeitsträger

## Patentansprüche

1. Fahrzeugluftreifen für Nutzfahrzeuge mit einer Karkasse (5), mit einem radial außerhalb der Karkasse (5) aufgebauten Gürtel (9) und mit einem radial oberhalb des Gürtels (9) auf dem Gürtel (9) aufgebauten profilierten Laufstreifen (10), wobei der Gürtel (9) aus wenigstens drei von radial innen nach radial außen - insbesondere auf einander liegend - angeordneten Gürtellagen (13,14,15) ausgebildet ist, von denen die radial innere (13) und die radial äußere (15) als Arbeitslagen mit in Gummi eingebetteten parallelen Festigkeitsträgern (23,25) aus Stahl ausgebildet sind, wobei die Festigkeitsträger (23) der radial inneren Arbeitslage (13) in ihrer Ausrichtung einen Winkel α mit 10°≤α≤45° zur Umfangsrichtung U und die Festigkeitsträger (25) der radial äußeren Arbeitslage (15) in ihrer Ausrichtung einen Winkel γ zur Umfangsrichtung U mit 10°≤γ≤45° einschließen und wobei in Umfangsrichtung U des Fahrzeugreifens gesehen die Festigkeitsträger (23) der radial inneren Arbeitslage (13) eine entgegengesetzte axiale Neigungsrichtung zu den Festigkeitsträgern (25) der radial äußeren Arbeitslage (15) aufweisen,
wobei die radial zwischen diesen beiden Arbeitslagen (13,15) angeordnete Gürtellage (14) in axialer Richtung A des Fahrzeugluftreifens dreigeteilt aus zwei axialen äußeren Randlagenabschnitten (18,19) und aus einem axial zwischen diesen angeordneten Mittenlagenabschnitt (14) ausgebildet ist, wobei die beiden Randlagenabschnitte (18,19) als Nullgradlage ausgebildet sind mit in Gummi eingebetteten parallelen - insbesondere fadenförmigen - Festigkeitsträgern (28,29), die in ihrer Ausrichtung einen Winkel β mit 0°≤β≤5° zur Umfangsrichtung U einschließen, und
wobei der Mittenlagenabschnitt (14) mit in Gummi eingebetteten Festigkeitsträgern (24) ausgebildet ist, die in ihrer Ausrichtung einen Winkel η mit 5°<η≤90° zur Umfangsrichtung U einschließen,
**dadurch gekennzeichnet,**
**dass** radial innerhalb der radial äußeren Arbeitslage (15) zwischen der äußeren Arbeitslage (15) und der Gürtellage (14) eine weitere in axialer Richtung A des Fahrzeugluftreifens aus zwei axialen äußeren Randlagenabschnitten (32,33) und aus einem axial zwischen diesen angeordneten Mittenlagenabschnitt (31) dreigeteilte Gürtellage (30) ausgebildet ist,
**dass** die beiden Randlagenabschnitte (32,33) mit in Gummi eingebetteten Festigkeitsträgern (35,36) ausgebildet sind, die in ihrer Ausrichtung einen Winkel ζ mit 5°<ζ≤90° zur Umfangsrichtung U einschließen, und
**dass** der Mittenlagenabschnitt (31) als Nullgradlage ausgebildet ist mit in Gummi eingebetteten parallelen Festigkeitsträgern (34), die in ihrer Ausrichtung einen Winkel θ mit 0°≤θ≤5° zur Umfangsrichtung U einschließen.

2. Fahrzeugluftreifen gemäß den Merkmalen von Anspruch 1,
wobei die Randlagenabschnitte (18,19) jeweils mit einer in axialer Richtung A gemessenen axialen Erstreckung m im Fahrzeugluftreifen mit m ≤ 0,25B ausgebildet ist, wobei B die in axialer Richtung A des Fahrzeugluftreifens gemessene an der radial äußeren Mantelfläche gemessene Laufstreifenbreite ist.

3. Fahrzeugluftreifen gemäß den Merkmalen von einem der vorangegangenen Ansprüche,
wobei die radial äußere der beiden Arbeitslagen (15) in ihrer axialen Erstreckung c im Fahrzeugluftreifen kleiner ausgebildet ist als die radial innere der beiden Arbeitslagen (13),
wobei insbesondere die radial äußere (15) der beiden Arbeitslagen (13,15) zu beiden axialen Seiten hin innerhalb des axialen Erstreckungsbereiches der radial inneren (13) der beiden Arbeitslagen (13,15) endet.

4. Fahrzeugluftreifen gemäß den Merkmalen von einem der vorangegangenen Ansprüche,
wobei die radial zwischen den beiden Arbeitslagen (13,15) angeordnete Gürtellage (14) in ihrer axialen Erstreckung b im Fahrzeugluftreifen - insbesondere mindestens 10 mm - kleiner ausgebildet ist als jede der beiden Arbeitslagen (13,15).

5. Fahrzeugluftreifen gemäß den Merkmalen von einem der vorangegangenen Ansprüche,
wobei radial außerhalb der radial äußeren Arbeitslage (15) auf der äußeren Arbeitslage (15) eine weitere Gürtellage (16) mit parallelen in Gummi eingebetteten Festigkeitsträgern (26) ausgebildet ist.

6. Fahrzeugluftreifen gemäß den Merkmalen von Anspruch 5,
wobei die weitere Gürtellage (16) als Nullgradlage ausgebildet ist, deren Festigkeitsträger (26) in ihrer Ausrichtung einen Winkel δ zur Umfangsrichtung U des Fahrzeugluftreifens mit 0°≤ δ ≤5°einschließen.

7. Fahrzeugluftreifen gemäß den Merkmalen von Anspruch 6,
wobei die weitere Gürtellage (16) in ihrer axialen Erstreckung f im Fahrzeugluftreifen mit (0,2B) ≤ f ≤ (0,5B) ausgebildet ist.

8. Fahrzeugluftreifen gemäß den Merkmalen von Anspruch 5,
wobei die Festigkeitsträger (26) der zusätzlichen Gürtellage (16) in ihrer Ausrichtung einen Winkel δ zur Umfangsrichtung U des Fahrzeugluftreifens mit 5°<δ≤90°einschließen.

9. Fahrzeugluftreifen gemäß den Merkmalen von einem der vorangegangenen Ansprüche,
wobei radial innerhalb der radial inneren Arbeitslage (13) zwischen der Karkasse (5) und der radial inneren Arbeitslage (13) eine weitere Gürtellage (17) mit parallelen in Gummi eingebetteten Festigkeitsträgern (27) ausgebildet ist, deren Festigkeitsträger (27) in ihrer Ausrichtung einen Winkel ε zur Umfangsrichtung U des Fahrzeugluftreifens - insbesondere mit 45°≤ε≤90° - einschließen.

10. Fahrzeugluftreifen gemäß den Merkmalen von Anspruch 1,
wobei der Mittenlagenabschnitt (31) dieser dreigeteilten Gürtellage (30) in seiner axialen Erstreckung w im Fahrzeugluftreifen mit (0,2B) ≤ w ≤ (0,5B) ausgebildet ist.

11. Fahrzeugluftreifen gemäß den Merkmalen von einem oder mehreren der vorangegangenen Ansprüche,
wobei die Festigkeitsträger (23,25) der Arbeitslagen (13,15) Festigkeitsträger aus Stahl sind.

12. Fahrzeugluftreifen gemäß den Merkmalen von einem oder mehreren der vorangegangenen Ansprüche,
wobei die Festigkeitsträger (28,26,34) einer oder mehrerer - insbesondere aller - Nullgradlage(n) (18,16,31) Festigkeitsträger aus Stahl sind.

13. Fahrzeugluftreifen gemäß den Merkmalen von Anspruch einem oder mehreren der vorangegangenen Ansprüche,
wobei die Festigkeitsträger (28,26,34) einer oder mehrerer - insbesondere aller - Nullgradlage(n) (18,16,31) High-Elongation-Korde (HE) sind.

14. Fahrzeugluftreifen gemäß den Merkmalen von einem der vorangegangenen Ansprüche,
wobei die Festigkeitsträger (26,27) der zusätzlichen Gürtellage (16,17) Festigkeitsträger aus Stahl sind.

## Claims

1. Pneumatic vehicle tyre for utility vehicles, having a carcass (5), having a belt (9) constructed radially outside the carcass (5) and having a profiled tread (10) which is constructed on the belt (9) radially above the belt (9), wherein the belt (9) is formed from at least three belt plies (13, 14, 15) which are arranged from radially inside to radially outside, in particular so as to lie one on top of the other, the radially inner (13) and the radially outer (15) of which belt plies are in the form of working plies with parallel strength members (23, 25) which are composed of steel and embedded in rubber, wherein the strength members (23) of the radially inner working ply (13), in their orientation, enclose an angle α with the circumferential direction U, where 10° ≤ α ≤ 45°, and the strength members (25) of the radially outer working ply (15), in their orientation, enclose an angle γ with the circumferential direction U, where 10° ≤ γ ≤ 45°, and wherein, as viewed in the circumferential direction U of the vehicle tyre, the strength members (23) of the radially inner working ply (13) have an axial direction of inclination opposite to that of the strength members (25) of the radially outer working ply (15),
wherein the belt ply (14) arranged radially between said two working plies (13, 15) is in three parts as viewed in the axial direction A of the pneumatic vehicle tyre, namely two axially outer marginal ply sections (18, 19) and a central ply section (14) arranged between said marginal ply sections, wherein the two marginal ply sections (18, 19) are in the form of zero-degree plies with parallel - in particular filiform - strength members (28, 29) which are embedded in rubber and which, in their orientation, enclose an angle β with the circumferential direction U, where 0° ≤ β ≤ 5°, and
wherein the central ply section (14) is formed with strength members (24) which are embedded in rubber and which, in their orientation, enclose an angle η with the circumferential direction U, where 5° < η ≤ 90°,
**characterized**
**in that**, radially within the radially outer working ply (15), between the outer working ply (15) and the belt ply (14), there is formed a further belt ply (30) which is in three parts as viewed in the axial direction A of the pneumatic vehicle tyre, namely two axially outer marginal ply sections (32, 33) and a central ply section (31) arranged axially between said marginal ply sections,
**in that** the two marginal ply sections (32, 33) are formed with strength members (35, 36) which are embedded in rubber and which, in their orientation, enclose an angle ζ with the circumferential direction U, where 5° < ζ ≤ 90°, and
**in that** the central ply section (31) is in the form of a zero-degree ply with parallel strength members (34) which are embedded in rubber and which, in their orientation, enclose an angle θ with the circumferential direction U, where 0° ≤ θ ≤ 5°.

2. Pneumatic vehicle tyre according to the features of Claim 1,
wherein the marginal ply sections (18, 19) are each formed with an axial extent m in the pneumatic vehicle tyre, measured in the axial direction A, of m ≤ 0.25B, wherein B is the tread width measured in the axial direction A of the pneumatic vehicle tyre and measured at the radially outer shell surface.

3. Pneumatic vehicle tyre according to the features of one of the preceding claims,
wherein the radially outer of the two working plies (15) is designed to be smaller, in its axial extent c in the pneumatic vehicle tyre, than the radially inner of the two working plies (13), wherein in particular, the radially outer (15) of the two working plies (13, 15) ends, to both axial sides, within the axial range of extent of the radially inner (13) of the two working plies (13, 15).

4. Pneumatic vehicle tyre according to the features of one of the preceding claims,
wherein the belt ply (14) arranged radially between the two working plies (13, 15) is designed to be smaller, in its axial extent b in the pneumatic vehicle tyre, said axial extent being in particular at least 10 mm, than each of the two working plies (13, 15).

5. Pneumatic vehicle tyre according to the features of one of the preceding claims,
wherein a further belt ply (16) with parallel strength members (26) embedded in rubber is formed on the outer working ply (15) radially outside the radially outer working ply (15).

6. Pneumatic vehicle tyre according to the features of Claim 5,
wherein the further belt ply (16) is in the form of a zero-degree ply, the strength members (26) of which, in their orientation, enclose an angle δ with the circumferential direction U of the pneumatic vehicle tyre, where 0° ≤ δ ≤ 5°.

7. Pneumatic vehicle tyre according to the features of Claim 6,
wherein the further belt ply (16), with regard to its axial extent f in the pneumatic vehicle tyre, conforms to (0.2B) ≤ f ≤ (0.5B).

8. Pneumatic vehicle tyre according to the features of Claim 5,
wherein the strength members (26) of the additional belt ply (16), in their orientation, enclose an angle 5 with the circumferential direction U of the pneumatic vehicle tyre, where 5° ≤ δ ≤ 90°.

9. Pneumatic vehicle tyre according to the features of one of the preceding claims,
wherein a further belt ply (17) with parallel strength members (27) embedded in rubber is formed radially within the radially inner working ply (13) between the carcass (5) and the radially inner working ply (13), the strength members (27) of which further belt ply, in their orientation, enclose an angle ε with the circumferential direction U of the pneumatic vehicle tyre, in particular where 45° ≤ ε ≤ 90°.

10. Pneumatic vehicle tyre according to the features of Claim 1,
wherein the central ply section (31) of said three-part belt ply (30), with regard to its axial extent w in the pneumatic vehicle tyre, conforms to (0.2B) ≤ w ≤ (0.5B).

11. Pneumatic vehicle tyre according to the features of one or more of the preceding claims,
wherein the strength members (23, 25) of the working plies (13, 15) are strength members composed of steel.

12. Pneumatic vehicle tyre according to the features of one or more of the preceding claims,
wherein the strength members (28, 26, 34) of one or more - in particular all - zero-degree ply (plies) (18, 16, 31) are strength members composed of steel.

13. Pneumatic vehicle tyre according to the features of one or more of the preceding claims,
wherein the strength members (28, 26, 34) of one or more - in particular all - zero-degree ply (plies) (18, 16, 31) are high-elongation cords (HE).

14. Pneumatic vehicle tyre according to the features of one of the preceding claims,
wherein the strength members (26, 27) of the additional belt ply (16, 17) are strength members composed of steel.

## Revendications

1. Bandage pneumatique pour roue de véhicule utilitaire, présentant une carcasse (5), une ceinture (9) montée à l'extérieur de la carcasse (5) et une bande de roulement (10) profilée montée sur la ceinture (9) radialement au-dessus de la ceinture (9),
la ceinture (9) étant formée d'au moins trois couches de ceinture (13, 14, 15) disposées radialement de l'intérieur vers l'extérieur et en particulier posées les unes sur les autres, parmi lesquelles la couche radialement intérieure (13) et la couche radialement extérieure (15) sont configurées comme couches de travail dotées de renforts (23, 25) en acier, parallèles et incorporés dans le caoutchouc,
l'orientation des renforts (23) de la couche radialement intérieure de travail (13) formant un angle α, 10° ≤ α ≤ 45° par rapport à la direction périphérique U et l'orientation des renforts (25) de la couche de travail radialement extérieure (15) formant un angle γ par rapport à la direction périphérique U, 10° ≤ γ ≤ 45°, les renforts (23) de la couche de travail radialement intérieure (13) présentant dans la direction périphérique U du bandage de roue de véhicule une inclinaison axiale opposée à celle des renforts (25) de la couche de travail radialement extérieure (15),
la couche de ceinture (14) disposée entre ces deux couches de travail (13, 15) étant divisée en trois dans la direction axiale A du bandage pneumatique pour roue de véhicule, à savoir en deux sections axialement extérieures de couches de bord (18, 19) et en une section (14) de couche centrale disposée axialement entre ces dernières,
les deux sections (18, 19) de couche de bord étant configurées comme couches de degré zéro présentant des renforts (28, 29) parallèles, en particulier en forme de fil, incorporés dans le caoutchouc, et dont l'orientation forme par rapport à la direction périphérique U un angle β, 0° ≤ β ≤ 5°,
la section (14) de couche centrale étant configurée avec des renforts (24) incorporés dans le caoutchouc dont l'orientation par rapport à la direction périphérique U forme un angle η, 5° < η ≤ 90°,
**caractérisé en ce que**
radialement à l'intérieur de la couche de travail radialement extérieure (15), entre la couche de travail extérieure (15) et la couche de ceinture (14), une autre couche de ceinture (30) divisée en trois est formée dans la direction A du bandage pneumatique pour roue de véhicule, à savoir deux sections axialement extérieures de couche de bord (32, 33) et une section de couche centrale (31) disposée axialement entre ces dernières,
**en ce que** les deux sections (32, 33) de couche de bord sont configurées avec des renforts (35, 36) incorporés dans le caoutchouc et dont l'orientation par rapport à la direction périphérique U forme un angle ζ, 5° < ζ ≤ 90° et
**en ce que** la section de couche centrale (31) est configurée comme couche à degré zéro qui présente des renforts (34) parallèles incorporés dans le caoutchouc et dont l'orientation par rapport à la direction périphérique U forme un angle θ, 0° ≤ θ ≤ 5°.

2. Bandage pneumatique pour roue de véhicule selon les caractéristiques de la revendication 1, dans lequel les sections (18, 19) de couche de bord présentent chacune une extension axiale m, mesurée dans la direction axiale A, dans le bandage pneumatique pour roue de véhicule, m ≤ 0,25B, B étant la largeur de la bande de roulement mesurée dans la direction axiale A du bandage pneumatique pour roue de véhicule sur la surface d'enveloppe radialement extérieure.

3. Bandage pneumatique pour roue de véhicule selon les caractéristiques de l'une des revendications précédentes, dans lequel celle (15) des deux couches de travail située radialement à l'extérieur présente une extension axiale c dans le bandage pneumatique pour roue de véhicule plus petite que celle (13) des deux couches de travail située radialement à l'intérieur, celle (15) des deux couches de travail (13, 15) située radialement à l'extérieur se terminant sur les deux côtés axiaux à l'intérieur de l'extension axiale de celle (13) des deux couches de travail (13, 15) située radialement à l'intérieur.

4. Bandage pneumatique pour roue de véhicule selon les caractéristiques de l'une des revendications précédentes, dans lequel la couche de ceinture (14) disposée dans le bandage pneumatique pour roue de véhicule radialement entre les deux couches de travail (13, 15) présente une extension axiale b plus petite, en particulier d'au moins 10 mm, que celle des deux couches de travail (13, 15).

5. Bandage pneumatique pour roue de véhicule selon les caractéristiques de l'une des revendications précédentes, dans lequel une autre couche de ceinture (16) présentant des renforts (26) parallèles incorporés dans le caoutchouc est formée sur la couche extérieure de travail (15) radialement à l'extérieur de la couche radialement extérieure de travail (15).

6. Bandage pneumatique pour roue de véhicule selon les caractéristiques de la revendication 5, dans lequel l'autre couche de ceinture (16) est configurée comme couche à degré zéro dont l'orientation des renforts (26) forme par rapport à la direction périphérique U du bandage pneumatique pour roue de véhicule un angle δ, 0° ≤ δ ≤ 5°.

7. Bandage pneumatique pour roue de véhicule selon les caractéristiques de la revendication 6, dans lequel l'autre couche ce ceinture (16) présente une extension axiale f dans le bandage pneumatique pour roue de véhicule, avec (0,2B) ≤ f ≤ (0,5B).

8. Bandage pneumatique pour roue de véhicule selon les caractéristiques de la revendication 5, dans lequel l'orientation des renforts (26) de la couche supplémentaire de ceinture (16) forme avec la direction périphérique U du bandage pneumatique pour roue de véhicule un angle δ, avec 5° < δ ≤ 90°.

9. Bandage pneumatique pour roue de véhicule selon les caractéristiques de l'une des revendications précédentes, dans lequel radialement à l'intérieur de la couche radialement intérieure de travail (13), entre la carcasse (5) et la couche radialement intérieure de travail (13), une autre couche de ceinture (17) dotée de renforts (27) parallèles incorporés dans le caoutchouc est formée, l'orientation des renforts (27) formant par rapport à la direction périphérique U du bandage pneumatique pour roue de véhicule un angle ε, 45° ≤ ε ≤ 90°.

10. Bandage pneumatique pour roue de véhicule selon les caractéristiques de la revendication 1, dans lequel la section (31) de couche centrale de cette couche de ceinture (30) divisée en trois présente une extension axiale w dans le bandage pneumatique pour roue de véhicule, avec (0,2B) ≤ w ≤ (0,5B).

11. Bandage pneumatique pour roue de véhicule selon les caractéristiques d'une ou plusieurs des revendications précédentes, dans lequel les renforts (23, 25) des couches de travail (13, 15) sont des renforts en acier.

12. Bandage pneumatique pour roue de véhicule selon les caractéristiques d'une ou plusieurs des revendications précédentes, dans lequel les renforts (28, 26, 34) d'une ou plusieurs et en particulier de toutes les couches (18, 16, 31) à degré nul sont des renforts en acier.

13. Bandage pneumatique pour roue de véhicule selon les caractéristiques d'une ou plusieurs des revendications précédentes, dans lequel les renforts (28, 26, 34) d'une ou plusieurs et en particulier de toutes les couches (18, 16, 31) à degré nul sont des câbles à haut allongement (HE).

14. Bandage pneumatique pour roue de véhicule selon les caractéristiques d'une des revendications précédentes, dans lequel les renforts (26, 27) de la couche de ceinture supplémentaire (16, 17) sont des renforts en acier.
